# EUROPEAN PATENT SPECIFICATION

(11) **EP 2 609 101 B1**
(45) Date of publication and mention of the grant of the patent: **28.01.2015**
(21) Application number: 10739510.5
(22) Date of filing: 14.07.2010
(51) Int. Cl.: C07F 9/38

(54) **PROCESS FOR THE PREPARATION OF 3-(N-METHYL-N-PENTYL)AMINO-1-HYDROXYPROPANE-1,1-DIPHOSPHONIC ACID SALT OR DERIVATIVES THEREOF**
VERFAHREN ZUR HERSTELLUNG VON 3- (N-METHYL-N-PENTYL) AMINO-1-HYDROXYPROPAN-1,1-DIPHOSPHONSÄURESALZ ODER DERIVATEN DAVON
PROCÉDÉ DE SYNTHÈSE DU SEL D'ACIDE 3-(N-MÉTHYL-N-PENTYL)AMINO-1-HYDROXYPROPANE-1,1-DIPHOSPHONIQUE OU DE SES DÉRIVÉS

(43) Date of publication of application: 03.07.2013
(73) Proprietor: Pharmathen S.A., 15351 Pallini Attikis (GR)
(72) Inventor: KOFTIS, Theocharis, V., GR-57001 Thessaloniki (GR); MENISIOU, Aristotelis, GR-546 39 Thessaloniki (GR); SONI, Rohit, Ravikant, GR-57001 Thessaloniki (GR)
(86) International application number: PCT/EP2010/004269
(87) International publication number: WO 2012/007021

(56) References cited:
- WO-A1-2007/013097
- WO-A2-2008/014510
- US-A- 4 922 007

## Description

### TECHNICAL FIELD OF THE INVENTION

The present invention relates to an improved process for the preparation of 3-(*N-*methyl-*N-*pentyl)amino-1-hydroxypropane-1,1-diphosphonic acid salt, or its derivatives, and in particular to a process for the preparation of substantially pure crystalline 3-(*N-*methyl-*N*-pentyl)amino-1-hydroxypropane-1,1-diphosphonic acid, monosodium salt, monohydrate polymorph B.

### BACKGROUND OF THE INVENTION

Ibandronate sodium is a member of the bisphosphonate class of pharmaceuticals and is widely used in the treatment and prevention of various bone disorders including postmenopausal osteoporosis in women. The physiologically-active salts of the diphosphonic acids, in particular their mono- or dialkali metal salts, can usually be readily purified by reprecipitation from water/methanol or from water/acetone.

Ibandronate sodium is chemically termed 3-(*N*-methyl-*N*-pentyl)amino-1-hydroxypropane-1,1-diphosphonic acid, monosodium salt (hereinafter referred to as "ibandronate sodium") and has the following structural formula:

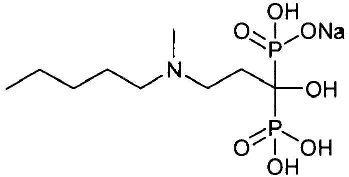

Various methods are already known for the preparation of ibandronate sodium or derivatives thereof due to its useful properties.

US-A-4 407 761 discloses a process for the preparation of ω-amino-1-hydroxyalkylidine-1,1-bisphosphonic acid. The bisphosphorylation mixture comprised phosphorous acid and phosphorus trichloride in the presence of chlorobenzene as diluent. The yield of the reaction was moderate; however, it is known that the reaction starts as a two-phase melt which gradually thickens, resulting in a semi-solid, with the concurrent loss of agitation. Upon cooling, the semi-solid forms a brittle glass which must be hydrolysed to the product by refluxing in concentrated hydrochloric acid. The use of concentrated hydrochloric acid (at reflux), which is toxic, corrosive and dangerous in the environment, and which requires the use of expensive glass reaction vessels, is a further disadvantage of this process.

US-A-4 927 814 discloses a process for the preparation of *N*-alkylated diphosphonate derivatives, including ibandronate sodium, which involves the use of chlorobenzene, phosphorous acid and phosphorus trichloride. The subsequent hydrolysis to the respective acids takes place by preferably boiling with semi-concentrated hydrochloric or hydrobromic acid. Ibandronic acid is isolated by using ion exchange resin chromatography, employing an Amberlite IR-120 (acidic form) column and eluted with water where elution is monitored electrophoretically. However these operations are very difficult and time consuming on an industrial scale. Furthermore, the disadvantage in the use of chlorobenzene as the reaction solvent is that it is a possible carcinogen and it is harmful in the environment and is thus not recommendable for industrial scale.

US-A-4 922 007 discloses a process for the preparation of 4-amino-1-hydroxybutylidene-1,1-bisphosphonic acid with the bisphosphorylation mixture comprising phosphorous acid (1.5 equivalents) and phosphorus trichloride (2.4 equivalents) in the presence of methanesulfonic acid (6.5 equivalents). Methanesulfonic acid is employed to solubilise the reaction components and render the reaction mixture stirrable up to completion of the reaction. However, it was observed that methanesulfonic acid reacts with phosphorus trichloride and that the reaction becomes self-heating above 85° C. Under adiabatic conditions the temperature increases steadily. If the increase in heat is not controlled, at a temperature of about 150° C, an exotherm accompanied by a large pressure release occurs and, therefore, the process is not safe for large-scale production.

Moreover, the prior art has tried to improve the processes for the preparation of ibandronate sodium using various solvents and diluents including; ionic liquids, aromatic hydrocarbons, aliphatic hydrocarbons, water miscible cyclic ethers, aliphatic ethers, silicone fluid, sulfolane, anisole, phenol and substituted phenols. These solvents and diluents are expensive and require efficient removal for the production of a pharmaceutically acceptable product.

Thus, there remains a need for a safe, economical and efficient industrial process for preparing ibandronate sodium monohydrate that is free from above-mentioned drawbacks and achieves high yields in environmental friendly conditions, which can also be further extended for the preparation of polymorphs.

It has been found that ibandronate sodium monohydrate may exist in various polymorphs. The ability of a substance to exist in more than one crystalline form is defined as polymorphism. Polymorphism may influence the solid-state properties of a pharmaceutical such as its solubility. One polymorph of ibandronate sodium monohydrate, hereinafter referred to as "polymorph A", was identified as being thermodynamically more stable, whereas a second polymorph of ibandronate sodium monohydrate, hereinafter referred to as "polymorph B", is easier to separate within the production process and may be transformed into other polymorphs if so desired.

WO-A-2006/081963 discloses a process for the preparation of ibandronate sodium monohydrate polymorph A wherein crystallisation is effected in a polar solvent such as water, with optional addition of a polar aprotic solvent such as acetone, and the crystallisation temperature is in the range from 50 to 70° C to provide ibandronate sodium monohydrate with the content of the crystalline polymorph A of at least 80%.

WO-A-2009/093258 discloses a process for the preparation of ibandronate sodium monohydrate polymorph B wherein polymorph B is crystallised from aqueous methanol, however the crystallisation temperature is not disclosed. Furthermore, a process for the preparation of ibandronate sodium monohydrate polymorph A from polymorph B is disclosed, wherein the crystallisation temperature is in the range from 25 to 30° C.

US-B-7 582 789 discloses a process for the preparation of ibandronate sodium monohydrate polymorph B, wherein the crystallisation temperature is in the range from 10 to 45° C to provide ibandronate sodium monohydrate with the content of the crystalline polymorph B of at least 80%.

WO2008/014510 discloses crystalline forms of ibandronic acid and methods for their preparation involving the reaction of N-methyl-N-pentyl amine propionic acid with phosphorous acid and phosphorus pentachloride in the presence of chlorobenzene and methane sulphonic acid.

However, the prior art processes for the preparation of ibandronate sodium monohydrate do not provide the yields and high purity of crystalline polymorph forms desired during the crystallisation process.

Although each of the above patents represents an attempt to overcome the use of costly and hazardous material, there is still a need to develop an efficient process for the preparation of ibandronate sodium monohydrate and for the preparation of ibandronate sodium monohydrate polymorph B in substantially pure crystalline form with a cost-effective process, ensuring safe reaction conditions and using the minimum of organic solvents to enable formulations to meet exact pharmaceutical requirements and specifications, i.e. with a minimum of expenditure during work-up and purification of the product.

### SUMMARY OF THE INVENTION

It is, therefore, an object of the present invention to provide an improved process for the preparation of substantially pure ibandronate sodium or its derivatives, which overcomes the deficiencies of the prior art and results in high purity and high yield of said compound.

Another object of the present invention is to specifically obtain substantially pure crystalline ibandronate sodium monohydrate polymorph B and to provide an efficient process for the preparation of substantially pure crystalline ibandronate sodium monohydrate polymorph B.

In accordance with the above objects of the present invention, a process for the preparation of substantially pure crystalline ibandronate sodium or its derivatives is provided comprising the following steps:
a) bisphosphorylating 3-(*N*-methyl-*N*-pentylamino)propionic acid, or its hydrochloride salt with a mixture of phosphorous acid and halophosphorus compound in methanesulfonic acid wherein the molar ratio of phosphorous acid to halophosphorus compound to methanesulfonic acid is in the range from 1.5:4.5:3.5 to 2.5:5.5:4.5 per mole of 3-(*N*-methyl-*N*-pentylamino)propionic acid, or its hydrochloride salt;
b) hydrolysing the reaction mixture by addition of water;
c) decolourising and filtering the mixture;
d) optionally, isolating 3-(*N*-methyl-*N*-pentyl)amino-1-hydroxypropane-1,1-diphosphonic acid from the aqueous phase by addition of water miscible anti-solvent selected from the group consisting of water miscible alcohol, ketone, nitrile and cyclic ether;
e) removal of water from the filtrate obtained from step c) and adjusting the pH of the remaining solution with an aqueous solution of sodium hydroxide;
f) precipitating 3-(*N*-methyl-*N*-pentyl)amino-1-hydroxypropane-1,1-diphosphonic acid, monosodium salt by addition of C₁₋₃ alkanol;
g) recovering and recrystallising 3-(*N*-methyl-*N*-pentyl)amino-1-hydroxypropane-1,1-diphosphonic acid, monosodium salt in a mixture of C₁₋₃ alkanol and polar solvent wherein the ratio of C₁₋₃ alkanol to polar solvent is 1:1 (v/v);
h) recovering and drying the recrystallised 3-(*N*-methyl-*N*-pentyl)amino-1-hydroxypropane-1,1-diphosphonic acid, monosodium salt.

Preferred embodiments of the present invention are set out in dependent claims 2 to 14.

Other objectives and advantages of the present invention will become apparent to those skilled in the art in view of the following detailed description.

### DETAILED DESCRIPTION OF THE INVENTION

The present invention relates to an improved process for the preparation of 3-(*N-*methyl-*N-*pentyl)amino-1-hydroxypropane-1,1-diphosphonic acid, monosodium salt, monohydrate polymorph B in high yield and high purity.

According to the present invention, the process for the preparation of ibandronate sodium or its derivatives comprises the following stages:

### Step 1: Bisphosphorylation

3-(*N*-methyl-*N*-pentylamino)propionic acid or its hydrochloride salt 4, is used as starting material and may be prepared according to a prior art process, wherein acrylonitrile 1 is treated with methylamine to yield propionitrile 2. Compound 2 is condensed with amylbromide in the presence of K₂CO₃ in DMF, and propionitrile 3 obtained there from is hydrolysed by means of refluxing in concentrated (30%) aqueous HCl to yield the desired 3-(*N-*methyl-*N-*pentylamino)propionic acid hydrochloride 4.

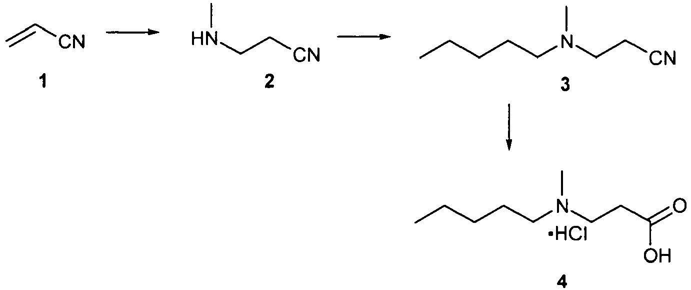

Said 3-(*N*-methyl-*N*-pentylamino)propionic acid or its hydrochloride salt 4 is bisphosphorylated by means of treatment with a mixture of phosphorous acid and a halophosphorus compound in methanesulfonic acid. The halophosphorus compound used in the process is selected from the group consisting of, but not limited to, PCl₃, PCl₅, POCl₃, PBr₃, PBr₅ and POBr₃, most preferably PCl₃.

The amount of phosphorous acid used in the process is about 1.5 to 2.5 mole equivalents per equivalent of 3-(*N*-methyl-*N*-pentylamino)propionic acid or its hydrochloride salt 4, most preferably 2.0 mole equivalents. The amount of halophosphorus compound used in the process is about 4.5 to 5.5 mole equivalents per equivalent of 3-(*N*-methyl-*N*-pentylamino)propionic acid or its hydrochloride salt **4,** most preferably 5.0 mole equivalents. The amount of methanesulfonic acid used in the process is about 3.5 to 4.5 mole equivalents per equivalent of 3-(*N*-methyl-*N-*pentylamino)propionic acid or its hydrochloride salt **4,** most preferably 4.0 mole equivalents.

Advantageously, the molar ratio of halophosphorus compound to methanesulfonic acid is 1:0.8 thus minimising the possibility of the two components reacting with one another. The process uses methanesulfonic acid as a solvent, which is less harmful than the prior art solvents and, furthermore, the reaction medium remains fluid for the duration of the bisphosphorylation reaction.

Conveniently, 3-(*N*-methyl-*N*-pentylamino)propionic acid or its hydrochloride salt **4** and phosphorous acid are solubilised in methanesulfonic acid at a temperature in the range from 50 to 75° C. The mixture is cooled to room temperature and the halophosphorus compound is then added.

Appropriate temperatures for the bisphosphorylation reaction are selected from the range 40 to 70° C but more preferably from the range 60 to 70° C, but even more preferably from the range 65 to 67° C. The relatively low temperature employed during the reaction is important for two reasons, namely, it avoids the danger of exothermy and it also limits the formation of byproducts which would otherwise occur at higher temperatures. The reaction is carried out for a period of about 24 hours.

Once the bisphosphorylation reaction is complete, the reaction mixture is cooled to a temperature in the range from 30 to 50° C and quenched by slow addition of chilled water. The reaction mixture is then hydrolysed at reflux, cooled to a temperature in the range from 20 to 30° C, decolourised with activated charcoal and then filtered. Water is removed from the aqueous filtrate by distillation under reduced pressure to provide 3-(*N*-methyl-*N*-pentyl)amino-1-hydroxypropane-1,1-diphosphonic acid **5,** *in situ.* Preferably, the process of the first aspect of the present invention is a single-pot reaction process. The product bisphosphonic acid 5 is isolated from the aqueous phase optionally by adding water miscible anti-solvent to the reaction mixture. The preferred anti-solvent used is water miscible alcohol, ketone, nitrile and cyclic ether.

### Step 2: Mono sodium salt preparation

Water is added to the methanesulfonic acid solution obtained from step 1 and the pH is adjusted to about 4.4 to 4.5 with addition of an aqueous solution of sodium hydroxide at a temperature in the range from 20 to 25° C.

3-(*N*-methyl-*N*-pentyl)amino-1-hydroxypropane-1,1-diphosphonic acid, monosodium salt **6** is precipitated from the solution by addition of C₁₋₃ alkanol. The C₁₋₃ alkanol used in the process is selected from the group consisting of methanol, ethanol and isopropanol, most preferably methanol.

After two recrystallisations with a mixture of C₁₋₃ alkanol, preferably methanol and a polar solvent, preferably water, wherein the ratio of C₁₋₃ alkanol to polar solvent is 1:1 (v/v), and final drying at a temperature in the range from 70 to 90° C, 3-(*N*-methyl-*N*-pentyl)amino-1-hydroxypropane-1,1-diphosphonic acid, monosodium salt **6** is provided as a white powder.

The advantages of the process for the preparation of 3-(*N*-methyl-*N*-pentyl)amino-1-hydroxypropane-1,1-diphosphonic acid sodium salt is the continuous mode of work up which reduces the time period for reaction workup as well as increases the feasibility on plant scale.

Another advantage of this process is the use of environmentally friendly conditions for the preparation of 3-(*N*-methyl-*N*-pentyl)amino-1-hydroxypropane-1,1-diphosphonic acid sodium salt in which the halogenated aromatic hydrocarbons of the prior art are avoided. Additionally, hydrolysis of the phosphorous intermediate with water avoids the prior art processes of hydrolysis in refluxing HCl or HBr.

In conclusion, this is an improved, safe, environmentally friendly, economical, commercially feasible and a high yielding process for the industrial production of 3-(*N*-methyl-*N-*pentyl)amino-1-hydroxypropane-1,1-diphosphonic acid sodium salt. This process is further extended for the preparation of polymorphs of ibandronate sodium monohydrate.

According to another embodiment of the present invention a process for the preparation of substantially pure crystalline ibandronate sodium monohydrate polymorph B is provided which comprises the following steps:
a) dissolving 3-(*N*-methyl-*N*-pentyl)amino-1-hydroxypropane-1,1-diphosphonic acid, monosodium salt **6** obtained from step 2 above in a polar solvent, preferably water, at a temperature in the range from 60 to 70° C followed by reducing the volume of polar solvent by distillation at atmospheric pressure (this aids in removing residual C₁₋₃ alkanol);
b) cooling the solution to a temperature in the range from 0 to 10° C, preferably from 0 to 5° C;
c) crystallising at said temperature by slow addition of a cold (at a temperature from 0 to 5° C) polar aprotic solvent, such as acetone, wherein the ratio of polar aprotic solvent to polar solvent is 2:1 (v/v), and maintaining said temperature while stirring until crystallisation is complete;
d) recovering ibandronate sodium monohydrate polymorph B crystals thus formed; and
e) optionally, washing the crystals with a cold (at a temperature from 0 to 5° C) mixture of a polar aprotic solvent, such as acetone, and a polar solvent, preferably water, wherein the ratio of polar aprotic solvent to polar solvent is 2:1, 1:1 or 7:5 (v/v), preferably 7:5 (v/v).

The crystals are dried under reduced pressure at a temperature in the range from 55 to 60° C for about 5 hours and then at a temperature of 90° C for about 24 hours to provide pure crystalline ibandronate sodium monohydrate polymorph B.

The temperature range for crystallisation is critical in determining the final polymorphic form obtained from the process. When the crystallisation temperature is above 50° C, the resulting polymorphic form is ibandronate sodium monohydrate polymorph A, and when the crystallisation temperature is in the range from 0 to 5° C, the resulting polymorphic form is ibandronate sodium monohydrate polymorph B.

The details of the process of the present invention will be demonstrated with reference to the following examples, which are provided by way of illustration only and should not be construed as limiting the scope of the invention in any manner.

### Example 1: Preparation of 3-(N-methyl-N-pentyl)amino-1-hydroxypropane-1,1-diphosphonic acid, monosodium salt.

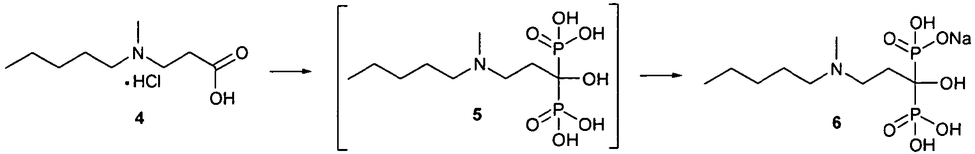

### Step 1: Bisphosphorylation

In a round-bottomed flask equipped with a mechanical stirrer, 3-(*N-*methyl-*N-*pentylamino)propionic acid hydrochloride **4** (100 g, 1.0 equivalent) and phosphorous acid (78 g, 2.0 equivalents) is dissolved in methanesulfonic acid (123.5 ml, 4.0 equivalents) under stirring. The reaction mixture is heated to a temperature in the range from 50 to 55° C for 30 minutes and then cooled to a temperature in the range from 20 to 25° C. Phosphorus trichloride (207.6 ml, 5.0 equivalents) is added to said reaction mixture and the mixture is heated to a temperature in the range from 65 to 67° C for 24 hours under stirring. The reaction mixture is cooled to a temperature in the range from 30 to 50° C, then chilled water (680 ml) at a temperature from about 4 to 8° C is added over a period of 40 to 45 minutes and the mixture heated to a temperature of about 100° C for 3 hours under stirring. The mixture is cooled to a temperature in the range from 20 to 30° C and then activated charcoal (10 g) is added and the mixture is stirred for a further 1.5 hours. The mixture is filtered through Celite (40 g) and the Celite bed washed with chilled water (2 x 100 ml) at a temperature from about 4 to 8° C. Water is removed from the aqueous filtrate by distillation under reduced pressure to provide 3-(*N*-methyl-*N*-pentyl)amino-1-hydroxypropane-1,1-diphosphonic acid **5,** *in situ.*

### Step 2: Mono sodium salt preparation

Water (400 ml) is added to the methanesulfonic acid solution and the pH is adjusted to about 4.4 to 4.5 by adding 30% w/v aqueous sodium hydroxide (*ca*. 570 ml), under stirring, at a temperature in the range from 20 to 25° C. Methanol (480 ml) is added to the mixture and said mixture is stirred at a temperature in the range from 20 to 25° C for 8 hours. The precipitated solid is filtered off and then washed with a cold (at a temperature from 0 to 5° C) mixture of methanol:water 1:1 (v/v) (2 x 180 ml). The solid is dried at a temperature of 70° C for 4 hours at atmospheric pressure.

In a round-bottomed flask equipped with a mechanical stirrer, said solid is dissolved in water (800 ml), under stirring, at a temperature in the range from 80 to 85° C and then methanol (800 ml) is added to the mixture at a temperature of 60° C and the mixture stirred for 10 minutes. The mixture is cooled to a temperature in the range from 20 to 25° C for 1 to 2 hours, stirred at this temperature for 2 to 3 hours and then filtered. The obtained solid is washed with a cold (at a temperature from 0 to 5° C) mixture of methanol:water 1:1 (v/v) (2 x 120 ml) and then dried at a temperature of 70° C for 4 hours at atmospheric pressure.

In a round-bottomed flask equipped with a mechanical stirrer, said solid is dissolved in water (800 ml), under stirring, at a temperature in the range from 80 to 85° C and then methanol (800 ml) is added to the mixture at a temperature of 60° C and the mixture is stirred for 10 minutes. The mixture is cooled to a temperature in the range from 20 to 25° C for 1 to 2 hours, stirred at this temperature for 2 to 3 hours and then filtered. The solid so obtained is washed with a cold (at a temperature from 0 to 5° C) mixture of methanol:water 1:1 (v/v) (2 x 120 ml) and then dried, under reduced pressure, at a temperature of 90° C to provide 3-(*N*-methyl-*N*-pentyl)amino-1-hydroxypropane-1,1-diphosphonic acid, monosodium salt **6** (150 g) with sodium content of 6.4% (w/w) as measured by ICP-MS. The yield for the two-step process is about 92%.

### Example 2: Preparation of crystalline 3-(N-methyl-N-pentyl)amino-1-hydroxypropane-1,1-diphosphonic acid, monosodium salt, monohydrate polymorph B.

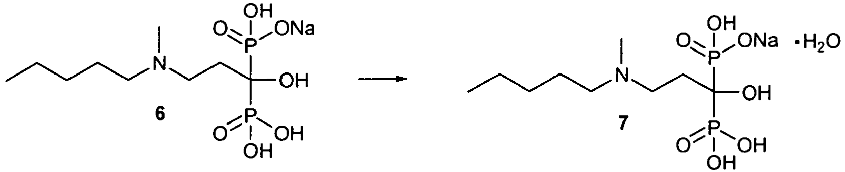

In a round-bottomed flask equipped with a mechanical stirrer, 3-(*N*-methyl-*N*-pentyl)amino-1-hydroxypropane-1,1-diphosphonic acid, monosodium salt **6** (100 g) (obtained according to example 1) is dissolved in water (600 ml), under stirring, at a temperature in the range from 60 to 70° C. The volume of water is reduced to about 300 ml by distillation at atmospheric pressure. The solution is cooled to a temperature in the range from 0 to 5° C and then cold (at a temperature in the range from 0 to 5° C) acetone (600 ml) is added to the solution over 5 to 15 minutes. The resultant mixture is stirred at a temperature in the range from 0 to 5° C for a further 4 to 5 hours and then filtered. The solid so obtained is washed with a cold (at a temperature in the range from 0 to 5° C) mixture of acetone:water 7:5 (v/v) (2 x 120 ml) and then dried at a temperature in the range from 55 to 60° C under reduced pressure for 5 hours and then further dried at a temperature of 90° C under reduced pressure for about 24 hours to provide 3-(*N-*methyl-*N-*pentyl)amino-1-hydroxypropane-1,1-diphosphonic acid, monosodium salt, monohydrate polymorph B 7 (90 g) with moisture content of 5% (w/w), as measured by weight loss upon drying at 130° C, with chemical purity above 99.6% as measured by HPLC and polymorph purity in the range from 99.5 to 99.8%. The yield of the crystallisation process is 86%.

The present invention describes a large-scale manufacturing process for the preparation of ibandronate sodium or its derivatives with improved quality at relatively low production cost compared to the known prior art processes. In conclusion, this is an improved, safe, environmentally friendly, economical, commercially feasible and high yielding process for the industrial production of ibandronate sodium or its derivatives.

While the present invention has been described with respect to the particular embodiments, it will be apparent to those skilled in the art that various changes and modifications may be made in the invention without departing from the scope thereof, as defined in the appended claims.

## Claims

1. A process for the preparation of substantially pure crystalline ibandronate sodium or its derivatives, which comprises
a) bisphosphorylating 3-(*N*-methyl-*N*-pentylamino)propionic acid, or its hydrochloride salt with a mixture of phosphorous acid and halophosphorus compound in methanesulfonic acid wherein the molar ratio of phosphorous acid to halophosphorus compound to methanesulfonic acid is in the range from 1.5:4.5:3.5 to 2.5:5.5:4.5 per mole of 3-(*N*-methyl-*N*-pentylamino)propionic acid, or its hydrochloride salt;
b) hydrolysing the reaction mixture by addition of water;
c) decolourising and filtering the mixture;
d) optionally, isolating 3-(*N*-methyl-*N*-pentyl)amino-1-hydroxypropane-1,1-diphosphonic acid from the aqueous phase by addition of water miscible anti-solvent selected from the group consisting of water miscible alcohol, ketone, nitrile and cyclic ether;
e) removal of water from the filtrate obtained from step c) and adjusting the pH of the remaining solution with an aqueous solution of sodium hydroxide;
f) precipitating 3-(*N*-methyl-*N*-pentyl)amino-1-hydroxypropane-1,1-diphosphonic acid, monosodium salt by addition of a C₁₋₃ alkanol;
g) recovering and recrystallising 3-(*N*-methyl-*N*-pentyl)amino-1-hydroxypropane-1,1-diphosphonic acid, monosodium salt in a mixture of C₁₋₃ alkanol and polar solvent wherein the ratio of C₁₋₃ alkanol to polar solvent is 1:1 (v/v);
h) recovering and drying the recrystallised 3-(*N*-methyl-*N*-pentyl)amino-1-hydroxypropane-1,1-diphosphonic acid, monosodium salt.

2. The process according to claim 1, wherein said process further comprises
i) dissolving 3-(*N*-methyl-*N*-pentyl)amino-1-hydroxypropane-1,1-diphosphonic acid, monosodium salt obtained from step h) in a polar solvent followed by reduction of the volume of polar solvent by distillation;
j) cooling the solution to a temperature in the range from 0 to 10° C;
k) crystallising at said temperature by slow addition of a cold polar aprotic solvent, wherein the ratio of polar aprotic solvent to polar solvent is 2:1 (v/v), and maintaining the said temperature while stirring until crystallisation is complete;
l) recovering 3-(*N*-methyl-*N*-pentyl)amino-1-hydroxypropane-1,1-diphosphonic acid, monosodium salt, monohydrate crystals thus formed;
m) optionally, washing the crystals with a cold mixture of a polar aprotic solvent and a polar solvent;
n) drying the crystals under reduced pressure at a temperature in the range from 55 to 60° C and then at a temperature of 90° C.

3. The process according to claim 1, wherein in step a) the molar ratio of phosphorous acid to halophosphorus compound to methanesulfonic acid is preferably 2:5:4 per mole of 3-(*N*-methyl-*N*-pentylamino)propionic acid, or its hydrochloride salt.

4. The process according to claim 3, wherein the bisphosphorylation of step a) is carried out at a temperature in the range from 40 to 70° C.

5. The process according to claim 3 or 4, wherein the halophosphorus compound of step a) is phosphorus trichloride.

6. The process according to claim 1, wherein the reaction mixture of step b) is hydrolysed at reflux.

7. The process according to claim 1, wherein in step e) the pH is adjusted to about 4.4 to 4.5.

8. The process according to claim 1, wherein in step f) the C₁₋₃ alkanol is methanol.

9. The process according to claim 1, wherein in step g) the C₁₋₃ alkanol is methanol and the polar solvent is water.

10. The process according to claim 2, wherein in step i) the polar solvent is water.

11. The process according to claim 2, wherein in step j) the solution is cooled to a temperature in the range from 0 to 5° C.

12. The process according to claim 2, wherein the polar aprotic solvent used in step k) is acetone and the polar solvent is water.

13. The process according to claim 12, wherein the temperature of the polar aprotic solvent is in the range from 0 to 5° C.

14. The process according to claim 2, wherein the polar aprotic solvent used in step m) is acetone and the polar solvent is water.

## Patentansprüche

1. Verfahren zur Herstellung von im Wesentlichen reinen kristallinen Ibandronat-Natrium oder dessen Derivaten, umfassend
a) bis-phosphorylieren von 3-(N-methyl-N-pentylamino)propionsäure oder deren Hydrochloridsalz mit einem Gemisch aus phosphoriger Säure und halophosphorus Verbindung in Methansulfonsäure bei dem das molare Verhältnis von phosphoriger Säure zu halophosphorus Verbindung zu Methansulfonsäure im Bereich von 1,5:4,5:3.5 bis 2,5:5,5:4,5 pro Mol 3-(N-methyl-N-pentylamino)-propionsäure oder deren Hydrochloridsalz ist;
b) hydrolysieren der Reaktionsmischung durch Zugabe von Wasser;
c) entfärben und Filtern des Gemischs;
d) wahlweise, isolieren 3-(N-methyl-N-pentyl)amino-1-hydroxypropan-1,1-diphosphonsäure von der wässrigen Phase durch die Zugabe eines Wasser mischbaren Nicht-Lösungsmittel, ausgewählt aus der Gruppe bestehend aus Wasser mischbaren Alkohol, Keton, Nitril und cyclische Ether;
e) entfernen von Wasser aus dem in Schritt c) erhaltene Filtrat; und der pH der verbleibenden Lösung mit einer wässrigen Lösung von Natriumhydroxid einstellen;
f) ausfällen von 3-(N-methyl-N-pentyl)amino-1-hydroxypropan-1,1-diphosphonsäure-Mononatriumsalz unter Zusatz von einer C₁₋₃ Alkanol;
g) rückgewinnen und um-kristallisieren von 3-(N-methyl-N-pentyl)amino-1-hydroxypropan-1,1-diphosphonsäure-Mononatriumsalz in einem Gemisch aus C₁₋₃ Alkanol und polaren Lösungsmittel, wobei das Verhältnis von C₁₋₃ Alkanol zu polaren Lösungsmittel 1: 1 (v / v) ist;
h) rückgewinnen und trocknen des um-kristallisierten 3-(N-methyl-N-pentyl)amino-1-hydroxypropan-1,1-diphosphonsäure-Mononatriumsalz.

2. Verfahren zur Herstellung nach Anspruch 1, wobei das Verfahren ferner umfasst
i) lösen von 3-(N-methyl-N-pentyl)amino-1-hydroxypropan-1,1-diphosphonsäure-Mononatriumsalz aus dem Schritt h) in einem polaren Lösungsmittel, gefolgt von einer Reduktion des Volumens des polaren Lösungsmittels durch Destillation erhalten werden;
j) abkühlen der Lösung auf eine Temperatur im Bereich von 0°C bis 10°C;
k) kristallisieren bei der genannten Temperatur durch langsame Zugabe einer kalten polaren aprotischen Lösungsmittel, wobei das Verhältnis des polaren aprotischen Lösungsmittels zu polarem Lösungsmittel 2:1 (v/v) ist, und der genannten Temperatur unter Rühren aufrechterhalten, bis die Kristallisation vollständig ist;
l) wiederherstellen der Monohydratkristalle der 3-(N-methyl-N-pentyl)amino-1-hydroxypropan-1,1-diphosphonsäure-Mononatriumsalz
m) wahlweise, Waschen die Kristallen mit einer kalten Mischung aus einem polaren aprotischen Lösungsmittel und einem polaren Lösungsmittel;
n) trocknen die Kristallen unter vermindertem Druck bei einer Temperatur im Bereich von 55°C bis 60°C und dann bei einer Temperatur von 90°C.

3. Verfahren zur Herstellung nach Anspruch 1, wobei in Schritt a) das molare Verhältnis von phosphoriger Säure zu halophosphorus Verbindung zu Säure Methansulfonsäure vorzugsweise 2:5:4 pro Mol des 3-(N-methyl-N-pentylamino)propionsäure oder deren Hydrochloridsalz ist.

4. Verfahren zur Herstellung nach Anspruch 3, wobei die bis-phosphorylierung von Schritt a) bei einer Temperatur im Bereich von 40°C bis 70°C durchgeführt ist.

5. Verfahren zur Herstellung nach Anspruch 3 oder 4, wobei die halophosphorus Verbindung von Schritt a) Phosphorus trichlorid ist.

6. Verfahren zur Herstellung nach Anspruch 1, wobei die Reaktionsmischung von Schritt b) unter Rückfluss hydrolysiert wird.

7. Verfahren zur Herstellung nach Anspruch 1, wobei der pH-Wert von Schritt e) von etwa 4.4 bis 4.5 eingestellt ist.

8. Verfahren zur Herstellung nach Anspruch 1, wobei das C₁₋₃ Alkanol von Schritt f) Methanol ist.

9. Verfahren zur Herstellung nach Anspruch 1, wobei das C₁₋₃ Alkanol von Schritt g) Methanol ist und das polare Lösungsmittel Wasser ist.

10. Verfahren zur Herstellung nach Anspruch 2, wobei das polare Lösungsmittel von Schritt i) Wasser ist.

11. Verfahren zur Herstellung nach Anspruch 2, wobei das Lösungsmittel von Schritt j) auf eine Temperatur im Bereich von 0°C bis 5°C abgekühlt ist.

12. Verfahren zur Herstellung nach Anspruch 2, wobei das polare aprotische Lösungsmittel von Schritt k) Aceton ist und das polare Lösungsmittel Wasser ist.

13. Verfahren zur Herstellung nach Anspruch 12, wobei die Temperatur des polaren aprotischen Lösungsmittels im Bereich von 0°C bis 5°C liegt.

14. Verfahren zur Herstellung nach Anspruch 2, wobei das polare aprotische Lösungsmittel von Schritt m) Aceton ist und das polare Lösungsmittel Wasser ist.

## Revendications

1. Un procédé pour la préparation du sodium de l'ibandronate cristallin substantiellement pure ou de ses dérivés comprenant :
a) la bisphosphorylation de l'acide 3-(*N*-méthyl-*N*-pentylamino) propionique, ou de son sel de chlorhydrate par un mélange d'acide phosphoreux et d'un composé halogénophosphoré dans de l'acide méthane sulfonique, où le rapport molaire de l'acide phosphoreux au composé halogénophosphoré et à l'acide methanesulfonique est dans l'intervalle de 1.5:4.5:3.5 à 2.5:5.5:4.5 par mole d'acide 3-(*N*- méthyl-*N*-pentylamino) propionique ou son sel de chlorhydrate;
b) l'hydrolyse du mélange réactionnel par addition d'eau;
c) la décoloration et la filtration du mélange;
d) optionnellement, l'isolation de l'acide 3-(*N*-méthyl-*N*-pentyl)amino-1-hydroxypropane-1,1-diphosphonique de la phase aqueuse par addition d'anti-solvant miscible avec l'eau sélectionné parmi le groupe consistant d'alcool miscible avec l'eau, de cétone, de nitrile et d'éther cyclique;
e) enlever l'eau du filtrat obtenu à l'étape c) et ajuster le pH de la solution restante avec une solution aqueuse d'hydroxyde de sodium;
f) la précipitation du sel mono sodique de l'acide 3-(*N*-méthyl-*N*-pentyl)amino-1-hydroxypropane-1,1-diphosphonique par addition d'un alcool C₁₋₃alkylique;
g) la récupération et la recristallisation du sel mono sodique de l'acide 3-(N-méthyl-N-pentyl)amino-1-hydroxypropane-1,1-diphosphonique avec un mélange d'alcool C₁₋₃alkylique et d'un solvant polaire, où le rapport d'alcool C₁₋₃alkylique au solvant polaire est de 1:1 (v/v);
h) la récupération et l'isolation du sel mono sodique de l'acide 3-(*N*-méthyl-*N*-pentyl)amino-1-hydroxypropane-1,1-diphosphonique recristallisé.

2. Le procédé selon la revendication 1, dans lequel le dit procédé comprend en outre :
i) la dissolution du sel mono sodique de l'acide 3-(*N-*méthyl-*N*-pentyl)amino-1-hydroxypropane-1,1-diphosphonique obtenu à l'étape h) dans un solvant polaire suivie par la réduction du volume du solvant polaire par distillation;
j) le refroidissement de la solution à une température dans l'intervalle de 0 à 10°C ;
k) la cristallisation à la dite température par addition lente d'un solvant polaire aprotique froid, où le rapport du solvant polaire aprotique au solvant polaire est de 2:1 (v/v), et maintien de la dite température tout en remuant jusqu'à cristallisation complète;
l) la récupération du sel mono sodique des cristaux monohydratés de l'acide 3-(*N*-méthyl-*N-*pentyl)amino-1-hydroxypropane-1,1-diphosphonique ainsi formés ;
m) optionnellement, le lavage des cristaux avec un mélange froid de solvant polaire aprotique avec un solvant polaire ;
n) le séchage des cristaux sous pression réduite à une température dans l'intervalle de 55 à 60°C et puis à une température de 90°C.

3. Le procédé selon la revendication 1, dans lequel à l'étape a) le rapport molaire d'acide phosphoreux au composé halogénophosphoré et à l'acide méthane sulfonique est préférablement de 2:5:4 par mole d'acide 3-(*N*-méthyl-*N*-pentylamino)propionique, ou de son sel de chlorhydrate.

4. Le procédé selon la revendication 3, dans lequel la bisphosphorylation à l'étape a) est conduite à une température dans l'intervalle de 40 à 70°C.

5. Le procédé selon la revendication 3 ou 4, dans lequel le composé halogénophosphoré de l'étape a) est le trichlorure de phosphore.

6. Le procédé selon la revendication 1, dans lequel le mélange réactionnel de l'étape b) est hydrolysé au reflux.

7. Le procédé selon la revendication 1, dans lequel à l'étape e) le pH est ajusté entre environ 4.4 et 4.5.

8. Le procédé selon la revendication 1, dans lequel à l'étape f) l'alcool C₁₋₃alkylique est le méthanol.

9. Le procédé selon la revendication 1, dans lequel à l'étape g) l'alcool C₁₋₃ alkylique est le méthanol et le solvant polaire est l'eau.

10. Le procédé selon la revendication 2, dans lequel à l'étape i) le solvant polaire est l'eau.

11. Le procédé selon la revendication 2, dans lequel à l'étape j) la solution est refroidie à une température dans l'intervalle de 0 à 5°C.

12. Le procédé selon la revendication 2, dans lequel le solvant polaire aprotique utilisé à l'étape k) est l'acétone et le solvant polaire est l'eau.

13. Le procédé selon la revendication 12, dans lequel la température du solvant polaire aprotique est dans l'intervalle de 0 à 5°C.

14. Le procédé selon la revendication 2, dans lequel le solvant polaire aprotique utilisé à l'étape m) est l'acétone et le solvant polaire est l'eau.
